Europäisches Patentamt

(19) European Patent Office

Office européen des brevets

(11) Publication number: **0 135 768**
**B1**

(12) EUROPEAN PATENT SPECIFICATION

(45) Date of publication of patent specification: **07.02.90**

(51) Int. Cl.⁵: **A 23 G 1/00**

(21) Application number: **84109572.2**

(22) Date of filing: **10.08.84**

(54) A process of preparation of the bacteria-free foamable oil-in-water emulsion including chocolate.

(30) Priority: **20.09.83 JP 173948/83**
**23.05.84 JP 102698/84**

(43) Date of publication of application:
**03.04.85 Bulletin 85/14**

(45) Publication of the grant of the patent:
**07.02.90 Bulletin 90/06**

(84) Designated Contracting States:
**BE DE FR GB IT NL SE**

(56) References cited:
**GB-A-1 293 476**
**US-A-2 883 286**
**US-A-3 098 746**
**US-A-3 232 765**
**US-A-3 821 420**
**US-A-4 017 645**

**JAPIO, 27th October 1983, sect. C, section no.
192, vol. 7, no. 242, page 16; & JP-A-58 129 944
(ASAHI DENKA KOGYO K.K.) 03-08-1983**

(73) Proprietor: **ASAHI DENKA KOGYO KABUSHIKI
KAISHA**
**2-35, Higashiogu 7-chome
Arakawa-ku Tokyo 116 (JP)**

(72) Inventor: **Mori, Michio**
**c/o Asahi Denka Kogyo K.K. 2-35, 7-chome
Higashiogu Arakawa-ku Tokyo (JP)**
Inventor: **Goto, Yoichi**
**c/o Asahi Denka Kogyo K.K. 2-35, 7-chome
Higashiogu Arakawa-ku Tokyo (JP)**
Inventor: **Muto, Kunio**
**c/o Asahi Denka Kogyo K.K. 2-35, 7-chome
Higashiogu Arakawa-ku Tokyo (JP)**
Inventor: **Usami, Shozo**
**c/o Asahi Denka Kogyo K.K. 2-35, 7-chome
Higashiogu Arakawa-ku Tokyo (JP)**

(74) Representative: **Patentanwälte Grünecker,
Kinkeldey, Stockmair & Partner
Maximilianstrasse 58
D-8000 München 22 (DE)**

# EP 0 135 768 B1

## Description

### Background of the invention

#### (1) Field of the invention

The present invention relates to a process for making a creamy bacteria-free foamable oil-in-water emulsion including chocolate, which has long lasting stability and high foamability, and which meets the current demand for baking or confectionary products having softness and wetness.

#### (2) Description of the prior art

There are many sorts of chocolate-including food products which comprise chocolate, raw cream, milk, nuts, and sugar, such as Ganache, Gianduya, Pralinen etc.

Ganache is a mixture of chocolate and cream and/or milk. Generally it is prepared by adding boiled cream or milk to melted chocolate, mixing them well, and leaving the mixture in a cooling room for 24 hours before use. Ganache is mainly used by painting or squeezing. It is possible to control Ganache softness by changing the ratio of chocolate.

Gianduya is a paste which is prepared by kneading grinded mixture of equivalent nuts and sugar with chocolate, cocoa, and butter. Gianduya is used for coating on cakes, filling of chocolate cakes, and filling of cakes with butter cream.

Pralinen is a sort of nougat.

It is obvious that chocolate has a wide variety of application and an important role as cake material.

As mentioned above, the softness of Ganache is controlled by changing the chocolate ratio. It is remarkable that such control is now very popular. Recently there has been a demand for confectionary products having softness and wetness. The tendency is the same with Ganache. Therefore, recent Ganache has become softer and wetter by controlling aqueous phase to increase the contents of milk.

In view of the above described situation, the inventors of the present invention studied Ganache and found the following problems.

Firstly, while chocolate itself has long lasting stability through including little water and much sugar, Ganache through including cream and milk has low stability on account of its high-content of water and dairy products and low-level of sugar. This is because $10^2$—$10^3$/g of bacteria exist in chocolate and cocoa mass.

Secondly, it is difficult to obtain consistently the Ganache having the desired softness by controlling the chocolate ratio.

The third problem is that foamability of cream is lost when chocolate is mixed with boiled cream. Very soft Ganache is sometimes able to be whipped, but this is not for foambility of cream but for aeration of mixing. Therefore, Ganache has never whipped cream-milk foamability.

Furthermore, the layer of whipped Ganache is easily cracked in the course of time. In an attempt to avoid the undesirable effect of cracks, particularly in large fancy cakes, it has been common practice to sprinkle shaved chocolate over the surface of the cakes in order to prevent the purchaser's desire reducing when cracks have occurred.

### Summary of the invention

The inventors of the present invention have seriously considered the aforenoted problems, especially the crack problem which is a very significant restriction when using chocolate in the field of confectionery, have attempted to solve these problems, and have accomplished the invention.

The process for the preparation of the bacteria-free foamable oil-in-water emulsion of the present invention comprises:

(a) forming an emulsion containing
    (1) 15—50 wt.% of oil,
    (2) 3—30 wt.% of enzyme-treated chocolate component,
    (3) 0.5—4.0 wt.% of sodium caseinate,
    (4) 2—6 wt.% of a defatted milk solid,
    (5) 10—30 wt.% of a sugar component,
    (6) 3—10 wt.% of emulsifier based on the oil
and the total amount of solids being 40—60% wt%
(b) sterilizing the said emulsion by heating at ultra high temperature.

### Detailed description of the invention

For the oil of the present invention, it is preferable to use a mixed oil of a lauric acid type oil having 30—38°C rising melting point and a non lauric type oil. The mixed oil preferably comprises at least 20 wt.% (more preferably 40 wt.%) of a lauric acid type oil. The use of such preferable oil gives good emulsion products having food foamability and standup quality.

As lauric acid type oils which have a rising melting point of 30—38°C, there are, for example, coconut oil, palm kernel oil, hardened, fractionated and interesterified oils thereof.

The non lauric acid type oils are represented by animal oil, vegetable oil, hardened, mixed or various processed oils thereof. Such a non lauric acid type oil preferably has 20—55 SFI at 10°C and a rising melting

2

point of 25—40°C. Examples of the non lauric acid type oils are fish oil, whale oil, rape seed oil, hardened, fractionated and interesterified oils thereof.

It is particularly preferred in the present invention to use the mixed oil including 5—30 wt.% of saturated or unsaturated fatty acid (including higher unsaturated fatty acid) and has more than 20 carbon atoms in the whole structured fatty acid. On the cakes no cracks occur in the course of time when the emulsion products of above defined oil are used.

The content of the oil is 15—50 wt.% in the whole emulsion of the present invention. If the content is below 15 wt.%, standup quality becomes weak, and if the content is over 50 wt.%, the emulsion solidifies like a brick and becomes unfoamable and therefore loses its practical utility.

The enzyme-treated chocolate component used in the present invention is obtained by adding enzyme to 20—50% aqueous chocolate solution, stirring at 20—90°C, preferably 40—70°C, for 0.2—15 hours, and if necessary, removing water by suitable means.

As chocolates used in the present invention, there are, for example, cacao mass, cacao butter, cacao powder, sweet chocolate, milk chocolate, cover chocolate. Such chocolate includes carbohydrate in its solid components.

The suitable enzyme used in the present invention is amylase, for example, α-amylase, β-amylase, glucoamylase, or combination of them. It is preferable to add 5—1000 DUN of α-amylase to 1 g of chocolate, 10—1000 AUN of β-amylase to 1 g of chocolate, 3—1000 U of glucoamylase to 1 g of chocolate. When a combination of amylases is used, it is preferable to add the said amount of each amylase.

The activity of enzyme to 1 g of chocolate (A) is calculated by the following formula:

$$(A) = (\text{activity}) \times (\text{the amount of added amylase}) \times 0.01$$

where activity is measured by dextrinogenic unit of Nagase (α-amylase), amylolytic unit of Nagase (β-amylase), Somogyi-Nelson (glucoamylase), and the amount of added amylase is weight percent based on solid chocolate.

The enzyme-treated chocolate components can be selected according to the desired flavor.

It is possible to select as required one or more chocolates such as cacao butter, cacao mass, cacao powder, sweet chocolate, milk chocolate, cover chocolate to create the desired flavor and taste. It is desirable to include 25 wt.% of cacao butter in the whole chocolate component to obtain good flavor and taste. The content of the chocolate component is 3—30 wt.% in the whole emulsion of the present invention. If the content is below 3 wt.%, the chocolate flavor of the emulsion is too weak, and if the content is over 30 wt.%, the balance between the chocolate component and other components in the emulsion destroys the ability to obtain a product of the desired flavor.

As suitable components used in the present invention, there are, for example, sucrose (cane sugar), fructose (fruit sugar), maltose (malt sugar), dextrose (grape sugar), liquid sugar, glucose syrup (mizuame). The selection of the sugar component mainly depends on the selection of the chocolate component. The desirable content of the sugar is 10—30 wt.% in the whole emulsion of the present invention. If the content of the sugar component is below 10 wt.%, the emulsion has a pronounced bitterness and it is not possible to obtain a product of mild flavor, and if the content is over 30 wt.%, the emulsion has over sweetness and insufficient foamability.

Sodium caseinate is effective for the maintenance of the emulsion structure. The effect of sodium caseinate is exhibited in the range of 0.5—4 wt.% in the whole emulsion of the present invention. If the content of sodium caseinate is below 0.5 wt.%, the effect is not found, if the content is over 4 wt.%, the flavor of sodium caseinate harms the flavor of the chocolate.

As defatted milk solids used in the present invention, there are, for example, milk, defatted milk, skim milk powder, whey powder, or soybean protein. The suitable content of the defatted milk solid is 2—6 wt.% in the whole emulsion of the present invention. If the content of the defatted milk solid is below 2 wt.%, the effect of the defatted milk solid is insufficient, and if the content is over 6 wt.%, the emulsion has a too strong milk flavor. The range (2—6 wt.%) of the defatted milk solid in the whole emulsion emphasizes the flavor of the chocolate.

As emulsifiers used in the present invention, there are, for example, lecithin, monoglyceride, sorbitan fatty acid ester, propylene glycol fatty acid ester, sugar fatty acid ester, polyglycerol fatty acid ester, polyoxyethylene fatty acid ester, polyoxyethylene sorbitan fatty acid ester, glycerol or polyglycerol condensed fatty acid ester. It is preferred to use the combination of hydrophilic emulsifier and lipophilic emulsifer, particularly preferred the combination of lecithin and monoglyceride and a third emulsifier(s) which is one or more selected from the group comprising sugar fatty acid ester, polyoxyethylene fatty acid ester, polyoxyethylene sorbitan fatty acid ester, and polyglycerol fatty acid ester. The content of the emulsifier is 3—10 wt.% based on the oil of the present invention. If the content of the emulsifier is below 3 wt.% as conventional, there is obtained an unfoamable emulsion or a low foamable emulsion which has no plasticity and a topping which is satisfactory in standup quality is not obtained. If the content is over 10 wt.%, the emulsion has a high viscosity and causes plasticization. The more preferable content of the emulsifier is 6—7 wt.% based on the oil of the present invention.

In the present invention, if necessary, it is possible to add stabilizer during the preparation of the emulsion. As the suitable stabilizer, there are, for example, locust bean gum, carrageenan, gelatin, crystalline cellulose, xanthan gum. Especially, crystalline cellulose is preferable for its palatable taste. The preferable content of the stabilizer is 0.05—3 wt.% in the whole emulsion of the present invention.

It is known to add phosphoric acid salts to the creamy emulsion. In the present invention, it is possible to add phosphoric acid salts to the emulsion. As suitable phosphoric acid salts, there are, for example, sodium polyphosphate, sodium metaphosphate, sodium orthophosphate, sodium pyrophosphate, or a combination thereof. Especially, sodium tripolyphosphate, sodium hexametaphosphate, trisodium orthophosphate are preferred. The preferable content of the phosphoric acid salt is 0.02—0.1 wt.% in the whole emulsion of the present invention.

In the production of the emulsion of the present invention, the components are emulsified under conventional oil-in-water emulsion preparing conditions. The whole emulsion contains 40—60 wt.% of solid components.

The resulting emulsion is subjected to the process of sterilizing by heating at ultra high temperature (UHT sterilizing process). The UHT sterilizing process can be carried out by means of commercial UHT sterilizing equipments. As the suitable indirect heating type UHT sterilizing equipments, there are, for example, APV Ultramatic UHT Treatment System (The A.P.V. Company Ltd.), Thermutator UHT System (Cherry Burrell), Sterideal UHT System (Stork), Contherm Scraped-Surface Heat Exchange System (Alfa-Laval), and as the suitable direct heating type UHT sterilizing equipments, there are, for example, APV Uperisation Continuous Sterilization System (The A.P.V. Company Ltd.), VTIS Sterilizing plant (Alfa-Laval), Laguiharre UHT System (Laguiharre), Pararisator UHT System (Paash Silkeborg), Vac-Heat UHT System (Crepaco).

The preferred embodiment of the present invention is as follows.

The oil phase is obtained by adding a lipophilic emulsifier to the oil which comprises at least 20 wt.% of a lauric acid type oil which has a rising melting point of 30—38°C and including 5—30% saturated or unsaturated fatty acids that have more than 20 carbon atoms in the whole fatty acid structure, and solubilizing by heating.

The aqueous phase is obtained by adding and dissolving the hydrophilic emulsifier, the enzyme-treated chocolate component, the sodium caseinate, the defatted milk solid, the sugar component, and the phosphoric acid salts, the stabilizer if necessary, in the above-mentioned ratio to water.

15—50 weight parts of the oil phase and 85—50 weight parts of the aqueous phase are mixed in the mixing chamber to obtain an oil-in-water pre-emulsion.

The resulting pre-emulsion is homogenized in the homogenizer to obtain an oil-in-water emulsion. It is possible to use various type of homogenizers such as high-pressure homogenizer, centrifugal homogenizer, or ultrasonic homogenizer in the present invention. Especially, a preferred homogenizer in the invention is a high-pressure homogenizer. In the case of using a high-pressure homogenizer, the homogenization pressure is important. In the present invention, the preferred pressure is about 50—100 kg/cm$^2$.

The resulting homogenized emulsion is sterilized in a UHT sterilizing equipment, again homogenized under the pressure of 10—50 kg/cm$^2$, cooled to about 5°C, packed into containers such as "tetra pack" containers under suitable conditions so as to obtain the bacteria-free emulsion product of the present invention.

The bacteria-free foamable oil-in-water emulsion of the present invention can be widely used as chocolate materials for various purposes, namely for kneading as it is, for nappe on whipping, for topping on whipping and plasticising, and for filling. The softness of the product can be controlled without changing the chocolate ratio. In the process of the present invention, it is not necessary to boil the cream. Because the product of the present invention is bacteria-free, it can be used in any cases requiring sterility. The whipped bacteria-free foamable oil-in-water emulsion of the present invention has no cracks for 3—5 days after nappe and topping on the fancy cakes and leaving at 15°C, or after nappe and topping on the fancy cakes and freezing at −25°C for 2—4 weeks and melting at 10°C and leaving at 15°C. On the contrary the conventional products have cracks after 1 day under the same conditions. The emulsion products of the present invention have long storage life and high commercial value.

Further, according to the process of the present invention, even if a large quantity of chocolate component is used, by using the enzyme-treated chocolate component as the chocolate component, the viscosity of the emulsion can be controlled in the low level and thereby the UHT sterilizing process and the homogenizing process can be conducted very easily.

The present invention is further illustrated by the following examples.

Examples

The oil phase was prepared by melting at 70°C 25 parts of hardened cotton seed oil having a rising melting point of 35°C, and adding 0.4 part of glycerine fatty acid ester (iodine value 20), and 0.5 part of lecithin.

Enzyme-treated cacao mass was prepared by adding α-amylase (Spitase cp-1 Nagase Sangyo) at a rate of 10 DUN to 1 g of cacao mass, stirring for 2 hours at 65°C, removing water by freeze-drying.

The aqueous phase was prepared by adding and dissolving 0.4 part of sugar fatty acid ester (HLB 11), 3 parts of skim milk powder, 0.6 part of sodium caseinate, 15 parts of an enzyme-treated cacao mass, 15 parts of sucrose, 0.1 part of crystalline cellulose, and 0.1 part of sodium hexametaphosphate to 40 parts of water.

The aqueous phase was heated to 40°C, and mixed with the oil phase. The mixture was agitated by the propeller agitator at about 50°C for 10—15 minutes to obtain a pre-emulsion. The resulting pre-emulsion was homogenized by a homogenizer applying a pressure of 100 kg/cm$^2$ to obtain an oil-in-water emulsion. The oil-in-water emulsion was maintained at about 50°C and sterilized by VTIS sterilizing plant (Alfa Laval) at 140°C for 2 seconds, and again homogenized by an homogenizer, and cooled at about 5°C to obtain the bacteria-free foamable oil-in-water emulsion of the present invention (emulsion product No. 1 in Table 1).

Emulsion products No. 2—5 which have various emulsion components were prepared by using the same operation conditions as for the emulsion product No. 1 (in Table 1).

Emulsion products No. 1—5 were aged in the refrigerator for 20 hours.

Tests results of emulsion products No. 1—5 are shown in Table 2.

The viscosity of the emulsion products No. 1—5 did not rise after 3 months leaving at 5°C.

500 ml of each of the emulsion products No. 1—5 was whipped by a whipper. Every whipped product had good foamability. Fancy cakes having 18 cm diameter were made of such whipped products and other cake materials. After leaving the cakes at 15°C for 5 days, no cracks were found, and their colour, flavor, and shape did not change. After freezing the cake at −25°C for 2 weeks, then melting them at 10°C for 6 hours, and leaving them at 15°C for 3 days, the state of cakes was as good as at the outset.

Comparative Examples

The emulsion products No. 6—8 which are not included in the present invention were prepared by using the same operation conditions as described above.

In these emulsion products, viscosity rose in the course of time, foamability was low, the balance of flavors was lost and only the chocolate flavor was exaggerated. Work efficiency of making cakes with these emulsion products was low. Coating with the whipped products on cakes is difficult. After leaving or freezing them as described above, the colour of cakes turned brown-black. As a consequence, the commercial value of these emulsion products was very low.

TABLE 1

| | No. 1 | No. 2 | No. 3 | No. 4 | No. 5 | No. 6 | No. 7 | No. 8 |
|---|---|---|---|---|---|---|---|---|
| Oil composition<br>hardened cotton seed oil (1)<br>hardened coconut oil (2) | 25 | 25 · | 15<br>15 | 15 | 40 | 30 | 30 | 20 |
| Chocolate component<br>α-amylase treated cacao mass (3)<br>β-amylase treated cacao powder (4)<br>gluco-amylase treated cacao powder (5)<br>α-amylase, β-amylase treated sweet chocolate (6)<br>non enzyme treated cacao powder | 15 | 10 | 5 | 30 | 3 | 15 | 5<br>5 | 20 |
| Sodium caseinate | 0.6 | 0.6 | 2 | 1 | 1 | 0.6 | 1 | 0.2 |
| Defatted milk solid<br>defatted skim milk powder<br>soybean protein | 3 | 2 | 4 | 1 | 3 | 3 | 2<br>1 | 0.2 |
| Sugar components<br>sucrose<br>fructose | 15 | 8<br>8 | 15 | 20 | 10 | 15 | 20 | 20 |
| Emulsifier<br>lecithin<br>glycerine fatty acid ester (Iodine value 20)<br>sugar fatty acid ester (HLB 11)<br>polyoxyethylene (8) stearate (HLB 11)<br>polyglycerine fatty acid ester (HLB 10.5) | 0.4<br>0.4<br>0.4 | 1<br>0.5<br>0.2<br><br>0.3 | 0.2<br>0.3<br>0.4<br>0.2<br>0.2 | 0.6<br>0.7 | 0.4<br>1<br>0.1<br>0.1 | 0.5<br>0.6<br>0.3 | 0.3<br>0.3<br>0.1<br><br>0.1 | 0.5<br>0.5<br>0.4<br>0.3<br>0.3 |
| Crystalline cellulose | 0.1 | 0.1 | 0.1 | 0.05 | | 0.1 | 0.1 | 0.1 |
| Sodium hexametaphosphate | 0.1 | 0.1 | 0.05 | 0.2 | | 0.1 | 0.1 | 0.1 |
| Content of all solid components | 60.0 | 55.8 | 58.4 | 51.6 | 56.8 | 65.2 | 64.9 | 62.6 |

EP 0 135 768 B1

Notes

(1) Rising melting point 35°C.

(2) Rising melting point 32°C.

(3) This enzyme-treated chocolate was prepared by adding α-amylase (Spitase cp-1 Nagase Sangyo) to 20% cacao mass aqueous solution (oil content 53%) at the rate of 10 DUN of α-amylase to 1 g of cacao mass, stirring at 65°C for 2 hours, then removing the water by freeze-drying.

(4) This enzyme-treated chocolate was prepared by adding β-amylase (maltozyme 206 Nagase Sangyo) to 30% cacao powder aqueous solution (oil content 23%) at the rate of 20 AUN of β-amylase to 1 g of cacao powder, stirring at 60°C for 15 hours, then drying by heated air.

(5) This enzyme-treated chocolate was prepared by adding glucoamylase (glucozyme Amana Seiyaku) to 30% cacao powder aqueous solution (oil content 23%) at the rate of 6 U of glucoamylase to 1 g of cacao powder, stirring at 55°C for 8 hours, then removing the water by freeze-drying.

(6) This enzyme-treated chocolate was prepared by adding α-amylase (spitase cp-1 Nagase Sangyo) and β-amylase (maltozyme 206 Nagase Sangyo) to 40% sweet chocolate aqueous solution (oil content 26.5%) at the rate of 5 DUN of α-amylase and 15 AUN of β-amylase to 1 g of sweet chocolate, stirring at 60°C for 10 hours.

TABLE 2
Fancy cake test

| | No. 1 | No. 2 | No. 3 | No. 4 | No. 5 | No. 6 | No. 7 | No. 8 |
|---|---|---|---|---|---|---|---|---|
| viscosity (freshly prepared product) (mPas) | 80 | 70 | 45 | 100 | 50 | S | 30 | 120 |
| whipping | A | A | A | A | A | C | C | C |
| viscosity (after 3 months at 5°C) (mPas) | 90 | 90 | 60 | 120 | 80 | S | S | S |
| (freshly prepared product) | | | | | | | | |
| coating property | A | B | B | A | A | C | A | A |
| standup quality | A | A | A | A | A | C | B | B |
| colour | A | A | A | A | A | A | A | A |
| flavor | A | A | A | A | A | C | A | A |
| (after 5 days at 15°C) | | | | | | | | |
| standup quality | A | A | A | B | A | B | B | B |
| colour | A | A | A | A | A | C | A | A |
| flavor | A | A | A | A | A | C | A | A |
| cracks | A | A | A | B | A | A | B | A |
| (after freezing and melting) | | | | | | | | |
| standup quality | A | A | A | B | A | B | B | B |
| colour | A | A | A | A | A | C | A | A |
| flavor | A | A | A | A | A | C | A | A |
| cracks | A | A | A | A | A | C | C | A |
| Utility | A | A | A | A | A | C | C | C |

A: good    B: average    C: bad    S: solid.

## EP 0 135 768 B1

### Claims

1. A process of preparation of a bacteria-free foamable oil-in-water emulsion including chocolate, comprising

(a) forming an emulsion containing
(1) 15—50 wt.% of an oil,
(2) 3—30 wt.% of an enzyme-treated chocolate component,
(3) 0.5—4 wt.% of sodium caseinate,
(4) 2—6 wt.% of a defatted milk solid,
(5) 10—30 wt.% of a sugar component,
(6) 3—10 wt.% of an emulsifier based on the oil,
and the total amount of solids being 40 to 60 wt.%
(b) sterilizing said emulsion by heating at ultra high temperature.

2. The process according to claim 1, wherein said oil is a mixed oil of a lauric type oil having a melting point of 30—38°C and a nonlauric type oil.

3. The process according to claim 2, wherein said mixed oil includes at least 20 wt.% of said lauric type oil.

4. The process according to claim 2, wherein said mixed oil includes at least 40 wt.% of said lauric type oil.

5. The process according to any of claims 2 to 4, wherein said mixed oil includes 5—30 wt.% of a saturated or unsaturated fatty acid (including a higher unsaturated fatty acid) having more than 20 carbon atoms.

### Patentansprüche

1. Verfahren zur Herstellung einer Schokolade enthaltenden, Bakterien-freien, schäumbaren Öl-in-Wasser Emulsion, umfassend

(a) Bildung einer Emulsion, enthaltend
(1) 15—50 Gew.-% eines Öls,
(2) 3—30 Gew.-% eines Enzym-behandelten Schokolade-Bestandteils,
(3) 0,5—4 Gew.-% Natriumcaseinat,
(4) 2—6 Gew.-% eines entfetteten Milchfeststoffes,
(5) 10—30 Gew.-% eines Zuckerbestandteils,
(6) 3—10 Gew.-% eines Emulgators, bezogen auf das Öl
und einer Gesamtmenge an Feststoff von 40—60 Gew.-%
(b) Sterilisieren dieser Emulsion durch Erhitzen auf ultrahohe Temperatur.

2. Verfahren nach Anspruch 1, worin das Öl ein Ölgemisch eines Öls vom Laurin-Typ mit einem Schmelzpunkt von 30—38°C und eines Öls vom Nicht-Laurin-Typ ist.

3. Verfahren nach Anspruch 2, worin das Ölgemisch mindestens 20 Gew.-% des Öls vom Laurin-Typ enthält.

4. Verfahren nach Anspruch 2, worin das Ölgemisch mindestens 40 Gew.-% des Öls vom Laurin-Typ enthält.

5. Verfahren nach einem der Ansprüche 2—4, worin das Ölgemisch 5—30 Gew.-% einer gesättigten oder ungesättigten Fettsäure (einbeziehend eine höhere ungesättigte Fettsäure) mit mehr als 20 Kohlenstoffatomen enthält.

### Revendications

1. Un procédé de préparation d'une émulsion du type huile dans l'eau apte à mousser, sans bactérie et contenant du chocolat, comprenant

(a) la formation d'une émulsion contenant
(1) 15—50% en poids d'une huile,
(2) 3—30% en poids d'un composant de chocolat traité à l'enzyme,
(3) 0,5—4% en poids de caséine de sodium,
(4) 2—6% en poids d'un extrait sec dégraissé du lait,
(5) 10—30% en poids d'un composant de sucre,
(6) 3—10% en poids d'un émulsifiant par rapport à l'huile
et la totalité des solides étant de 40 à 60% en poids
(b) la stérilisation de ladite émulsion en chauffant à température ultra élevée.

2. Le procédé selon la revendication 1, où ladite huile est une huile mélangée d'une huile de type laurique ayant un point de fusion de 30—38°C et d'une huile de type non laurique.

3. La procédé selon la revendication 1, où ladite huile mélangée comprend au moins 20% en poids de ladite huile de type laurique.

4. Le procédé selon la revendication 2, où ladite huile mélangée comprend au moins 40% en poids de ladite huile de type laurique.

9

5. Le procédé selon l'une quelconque des revendications 2 à 4, où ladite huile mélangée comprend 5—30% en poids d'un acide gras saturé ou non saturé (y compris un acide gras non saturé plus élevé) ayant plus de 20 atomes de carbone.